# EUROPEAN PATENT APPLICATION

(11) **EP 2 159 629 A1**
(43) Date of publication of application: **03.03.2010**
(21) Application number: 09000282.5
(22) Date of filing: 12.01.2009
(51) Int. Cl.: G02F 1/13

(54) **Flat screen assembly**

(30) Priority: 26.08.2008 CN 200820146868 U
(71) Applicant: Shenzhen TCL New Technology Ltd., Nanshan District Shenzhen Guangdong 518067 (CN)
(72) Inventor: Bertho, Dominique, 49320 Vauchretien (FR)
(74) Representative: Frese-Göddeke, Beate

(57) **Abstract**

A known flat screen assembly comprises a flat screen panel (1), e.g. a LCD panel (1), a housing with at least a rear cover (2) and a front cover (3) and with a connection means. The connection means comprises a connecting element (C) which, in an assembled position, is fixed to the flat screen panel (P) and to the rear cover (1). According to the invention, the connecting element (C) comprises at least one springy snapping portion. In the assembled position, the snapping portion (13) engages a corresponding snapping means of the front cover (2).

## Description

### BACKGROUND OF THE INVENTION

### FIELD OF THE INVENTION

The present invention is related to a flat screen assembly, which comprises a flat screen panel and a housing with at least a rear cover and a front cover. Flat screen assemblies are used for computers and TV apparatuses.

### DESCRIPTION OF THE PRIOR ART

A flat screen assembly, mentioned as a display apparatus, is described in the US 2002/0080297 A1. The display apparatus comprises a flat screen panel, namely an LCD panel and a panel support, and a housing with a front cover and a rear cover. It also comprises connection means, namely with at least one coupling and at least one rib. The coupling extends from one of either a rear surface of the front cover or a front face of the rear cover toward the other thereof, having a groove formed on its plane. The rib is formed by the other thereof and is engaged with the groove of the coupling.

The couplings and the ribs extending alongside the sides of the LCD panel still need a certain amount of space. The couplings and the ribs are all parts of the housing and connect the front cover and the rear cover with a limited snapping force.

In the US 2003/0227581 A1 a similar flat screen assembly, mentioned as a display apparatus, is described. Its connection means comprise added reinforcement elements, which need an additional amount of space between the LCD panel and the front cover.

A thin display apparatus known from the US 2004/0012729 A1 comprises a separate LCD frame provided around a LCD panel, a plurality of first combining parts formed on peripheral sides of the LCD frame and a plurality of second combining parts formed on the plane of the LCD frame. A front cover is placed in front of the LCD panel, covering the sides of the LCD panel and is combined to one of the first and second combining parts. A rear cover is placed behind the LCD panel and is combined to the other one of the combining parts. The front and rear cover are made of a conductive metal.

The separate LCD frame needs a significant amount of space between the LCD panel and the front cover. In addition, screws are visible on the front cover, which is formed with a plurality of through holes for the screws in order to couple the front cover to the LCD frame.

US 2003/0189681 A1 describes a structure for mounting a flat display module with a LCD display module, a rear cover and a front cover. The structure includes a supporting member for fixing the LCD display module within the rear cover. The supporting member comprises a supporting part which is plane-contacted with the rear side of the LCD display module, a horizontal guide portion which is vertically bent from the lateral side of the supporting part and a vertical guide portion which is vertically bent from the upper side of the supporting part. A joining part and a position guiding tab are bent upward from the end of the vertical guide portion.

These two parts need a gap between the LCD module and the rear cover. Due to the gap, a frame of the front cover is enlarged. The front cover is separately secured by a side mounting structure or a hook to the LCD display module.

### SUMMARY OF THE INVENTION

It is therefore desirable to improve a flat screen assembly in order to simplify the mounting of the assembly. In addition, it is desirable to improve a flat screen assembly with respect to a good contact between the parts of the housing itself and with respect to a small gap between the flat screen panel and the housing.

According to the invention this can be achieved by the features of claim 1. Possible advantageous developments of the invention are specified in the dependent claims.

A flat screen assembly of the invention comprises a flat screen panel, e.g. a LCD panel, and a housing with a rear cover, a front cover and with a connection means. The connection means comprises at least one connecting element which, in an assembled position, is fixed to the flat screen panel and to the rear cover. According to the invention, the connecting element is provided with at least one springy snapping portion which, in the assembled position, engages a corresponding snapping means of the front cover.

As an advantage of the invention, at least one separate connecting element is used in order to connect all three parts, the flat screen panel, the rear cover and the front cover. As a result, the mounting of the assembly is improved and the gap between the flat screen panel and the housing is diminished. A small gap enables a desirable small frame portion of the front cover.

Due to the snapping portion which, in the assembled position, engages the corresponding snapping means of the front cover, it is possible to apply a certain pressure between the front cover and the rear cover. This ensures a good contact between the housing parts itself and between the housing parts and the flat screen panel.

In an embodiment of the invention, the connecting element comprises a first part and a second part. The first part passes into the second part generating a springy connection, where the connection element is fixed at the first part to the flat screen panel and to the rear cover, and where the second part comprises one or more snapping portions.

A springy connection between the first part fixed to the rear cover and the second part connected to the front cover by a snapping connection enables a certain pressure between the rear cover and the front cover. Due to this pressure a possible gap between the front cover and the rear cover is closed.

Preferably, each snapping portion is generated as a snapping strip and comprises a recess for the snapping means of the front cover. In the assembled position, each snapping portion extends parallel to a side of the flat screen panel.

The use of at least one snapping portion generated as a strip and comprised with a recess, enables a very narrow gap between the flat screen panel and the front cover.

Advantageously the snapping portion, in the assembled position, applies pressure to the snapping means of the front cover in a direction vertical to a screen area.

Preferably, the recess is delimitated by a snapping lug.

In an embodiment of the invention, the snapping means comprises at least one hook for each recess which, in the assembled position, protrudes into the recess of the plate.

Preferably, the first part is generated as a fixing strip. The first part comprises a side portion which extends parallel to a side of the flat screen panel and at which, in the assembled position, the first part is fixed to the flat screen panel.

In an embodiment of the invention the side portion of the first part passes into a rear portion, which extends over a rear of the flat screen panel and which generates the springy connection. The rear portion comprises several strip sections, which are bent toward each other where, in the assembled position, the first part is fixed to the rear cover, namely at an end strip section of its rear portion.

Preferably, each second part comprises two snapping portions which are arranged beside the side portion of the first part.

Preferably, the connection means comprises at least two connecting elements which are arranged at opposite sides of the flat screen panel.

Preferably, the plates are generated by metal brackets.

### BRIEF DESCRIPTION OF THE DRAWINGS

The invention will be explained in more detail using one embodiment, which is illustrated in figures 1 to 5.

It shows:
- Figure 1,: a simplified perspective rear view of one connecting element of a flat screen assembly according to the invention;
- Figure 2,: a simplified perspective rear view of a detail of a flat screen panel of the flat screen assembly and the connecting element which is fixed on the flat screen panel;
- Figure 3,: a simplified perspective view of a detail of the flat screen panel with the connecting element arranged on a front cover;
- Figure 4,: a simplified cross section of a rear cover and the flat screen panel with the connecting element;
- Figure 5,: a simplified cross section of the flat screen panel with the connecting element and the front cover; and
- Figure 6,: a simplified perspective cross section of the assembly of the rear cover, the front cover and the flat screen panel with the connecting element.

### DETAILED DESCRIPTION OF THE INVENTION

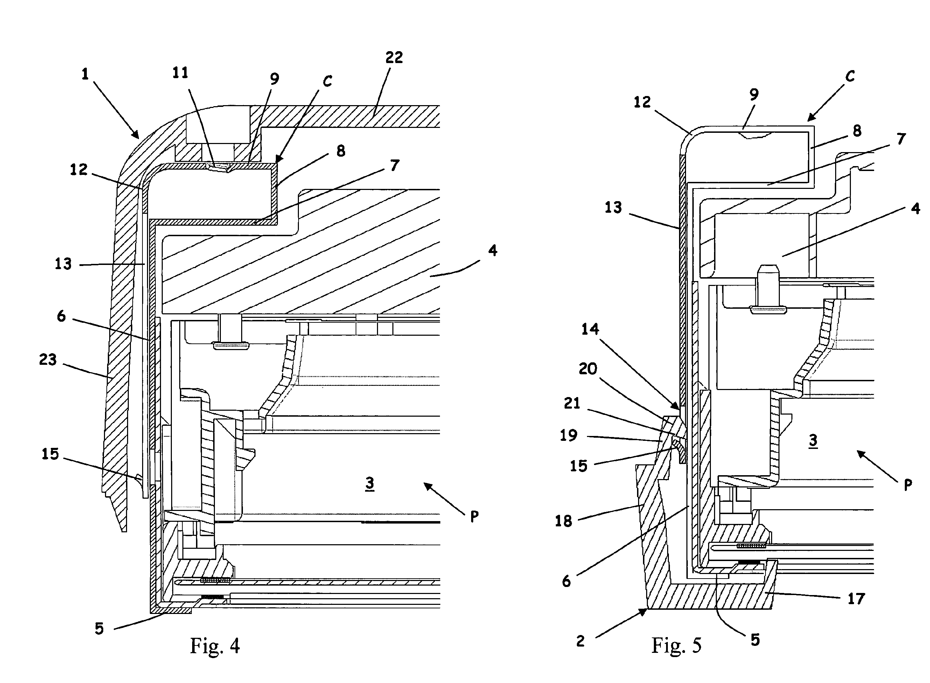

As shown in figure 5, a flat screen assembly of an embodiment of the invention comprises a flat screen panel P, which is generated e.g. by a LCD panel, and a housing with at least a rear cover 1 and a front cover 2. The housing also comprises a connection means with at least one connecting element C. In particular, in a first embodiment of the invention, the housing comprises eight connecting elements C of which two are arranged on each of the four sides of the housing.

Each connecting element C is provided with a springy snapping portion which, in the assembled position, engages a corresponding snapping means of the front cover 2.

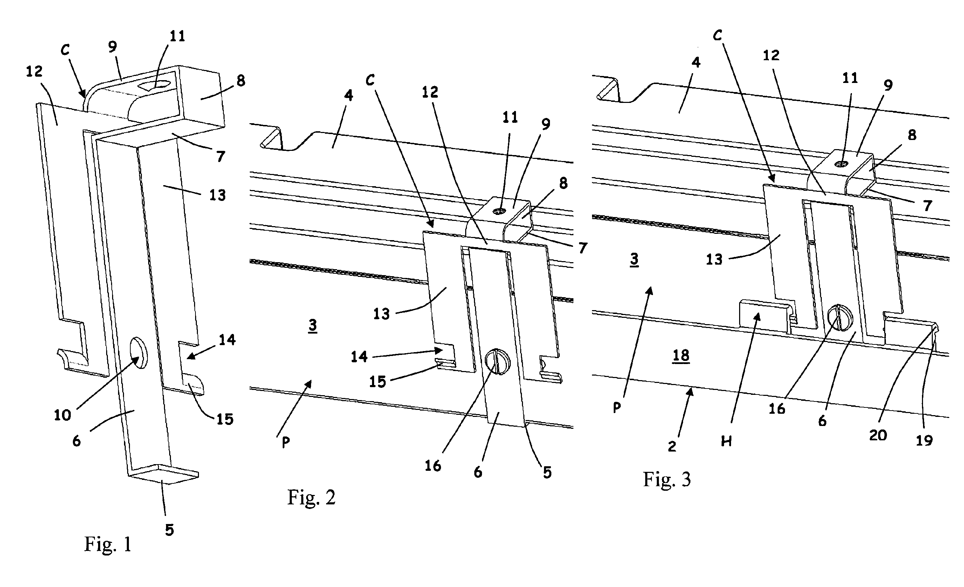

As shown in figures 2 to 6, the flat screen panel P has a panel body 3 which basically has the shape of a cuboid. The flat screen panel P comprises further components 4, e.g. at the rear of the panel body 3. Two of the eight connecting elements C are fixed to the flat screen panel P at each of the four sides of the flat screen panel P, namely of its panel body 3. One of the connecting elements C is shown in the figures.

In particular, figure 1 shows a separated connecting element C. Each connecting element C comprises a first part and a second part. The fist part passes into the second part while it generates a springy connection. The first part is generated as a fixing strip. It comprises a bottom portion 5 at its lower side, a side portion 6 and a rear portion with several sections, in particular with a first rear section 7, a transition section 8 and a second rear section 9, at its upper side. The bottom portion 6 and the rear portion extend to the rear of the connecting element C. This is shown in the perspective view from the rear of the connecting element C of the figure 1.

In particular, the bottom portion 6 is generated as a section which is bent at a right angled toward the rear of the connecting element C. The sections 7, 8 and 9 of the rear portion are bent toward the side portion 6 and toward each other in a way that the side view of the rear portion has the shape of a U rotated 90°. The first and second rear sections 7 and 9 generate the legs of the U and the transition section 8 generates the base of the U. The end section, i.e. the second rear section 9, passes into the second part of the connecting element C. The side portion 6 is provided with a first hole 10 and the second rear portion is provided with a threaded hole 11.

Due to its U-shaped arrangement, where its sections 7, 8, 9 are bent toward the side portion 6 and toward each other, the second rear section generates a springy connection to the second part, where the second part extends parallel to the side portion 6 of the first part.

The second part comprises a support portion 12 and two snapping portions 13, which are generated as snapping strips and arranged beside the side portion 6 of the first part.

In particular, the second rear section 9 of the first part passes into the middle of the broadened support portion 12 with a 90°-bend. The support portion 12 has the shape of a rectangle and passes into the snapping portions 13 at both sides. The snapping portions 13 extend parallel to each other and to the side portion 6 of the first part. The snapping portions 13 are arranged at or just before an area, in which the side portion 6 extends. They are arranged at a distance which is few millimetres greater than the breadth of the side portion 6. The breadth of the support portion 12 is a little greater than the sum of the breadths of the side portion 6 and the snapping portions 13. The breadth of the snapping portions 13 corresponds to the breadth of the side portion 6.

The length of each snapping portion 13 corresponds to a three-quarter length of the length of the side portion 6. Each snapping portion 13 is provided with a recess 14 at it lower region and at its outer side. The recess 14 is delimitated by a snapping lug 15 at is lower end. The snapping lug 15 is bent outwards to the front of the connecting element C. In this example, the recesses 14 are arranged at the height of the first hole 10 of the side portion 6.

Figure 2 shows the connecting element C fixed to the flat screen pane P. In this assembled position, the side portion 6 of the first part of the connecting element C extends in front of the corresponding side of the flat screen panel P and is fixed to the flat screen panel P by a first screw 16 projecting through the first hole 10 at the side portion 6. The side portion 6 of the plate extends vertical to a screen area of the flat screen panel P and the bottom portion 5 is arranged under the body 3 of the flat screen panel P. The second part also extends vertically to the screen area.

The rear portion of the first part extends over the rear of the flat screen panel P, where the rear portion 6 protrudes by a certain amount over the rear of the flat screen panel P. In the protruding region the upper rear section, i.e. the second rear section 9, of the rear portion is provided with the threaded hole 10 for fixing the connecting element C to the rear cover 1.

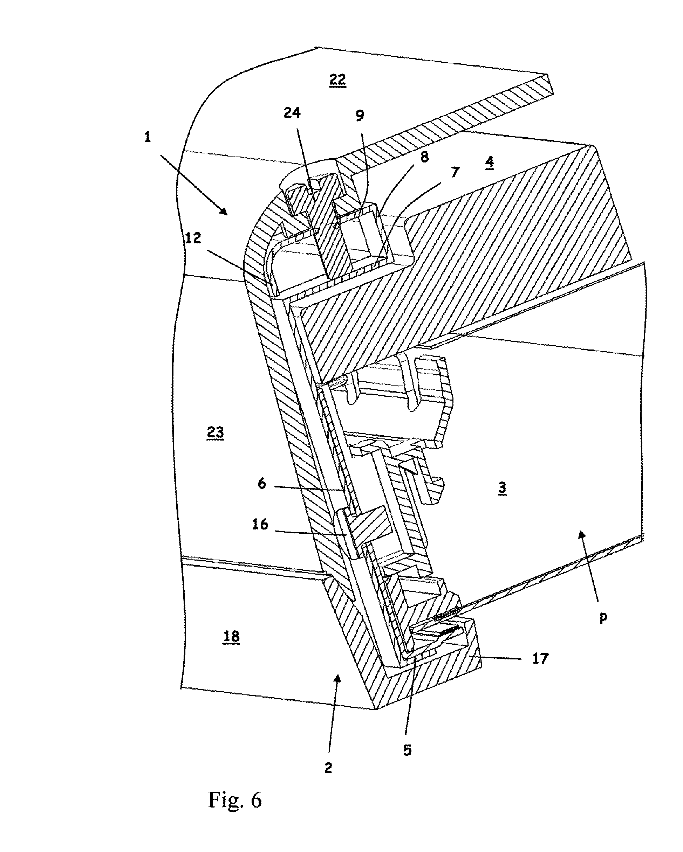

Figures 3, 5 and 6 show the flat screen panel P with the connecting element C arranged on the front cover 2. As shown in figures 5 and 6, the front cover 2 has a frame portion 17 and a skirt portion 18. The skirt portion 18 of the front cover 2 is generated by four side walls which extend over the sides, namely over a third of the sides, of the flat screen panel P. In the assembled position, the skirt portion 18 of the front cover 2 ends in the region of the recesses 14 and the snapping lugs 15 of the snapping portions 13.

The front cover 2 is provided with a snapping means for each snapping portion 13, namely for each recess 14 with the snapping lug 15. Each snapping means is generated as a hook H, which extends from the front cover 2 to the flat screen panel P, i.e. to connecting element C and which, in the assembled position, protrudes into the recess 13.

The hook H comprises bar part 19 and a hook part 20. The front cover 2 passes into the bar part 19, which extends along the border of the front cover 2 parallel to the screen area and parallel to the side of the flat screen panel P. The hook part 20 is generated as the top of the bar part 19 and protrudes into the inside of front cover 2. The hook part 20 is provided with a bottom face 21, which is inclined upwards in a direction of the bar part 19.

As shown in figures 4 and 6, the rear cover 1 has a bottom portion 22 and a wall portion 23, which corresponds to the skirt portion 18 of the front cover 2 and which is generated by four side walls. The side walls of the rear cover 1 extend over the sides, namely over two thirds of the sides, of the flat screen panel P and fit with the corresponding side walls of the front cover 2. Beside the hook H, the border of the skirt portion 18 and the border of the wall portion 16 are bevelled in correspondence to each other. This is shown in figure 6.

As shown in figure 6, the connecting element C is fixed to the rear cover 1 with a second screw 24, which protrudes through a boss 25 of the rear cover 1. In particular, the second rear section 9 of the first part is fixed to the rear cover 1 by the second screw 24.

In order to assemble the flat screen panel P with the front cover 2 and the rear cover 1, the flat screen panel P is provided with the connecting elements C. Each of the eight connecting elements C is arranged to the flat screen panel P and fixed by the first screws 16.

The flat screen panel P is arranged onto the front cover 2, while the snapping portions 13 of the connecting elements C engage with the snapping means, i.e. the hooks H, of the fronts cover 1. In particular, the snapping lugs 15 arrive under the bottom faces 21 of the hooks H.

The rear cover 1 is arranged onto the front cover 2. The second screws 24 are screwed into the threads of the threaded holes 11 of the connecting elements C. Due to the springy connections between the first and the second parts of the connecting elements C, the rear cover 1 is moved a short distance in the direction of the front cover 1 while screwed into the second screw 24 is screwed into the threaded hole 11. The distance is limited by the length of the screws 24 which, at their end positions, have contact with the first rear sections 7 of the first part.

In the assembled position, each snapping portion 13 of the connecting element C engages the corresponding hook H of the snapping means of the front cover 2. In particular, the snapping lug 15, is arranged beneath the bottom face 21 of the hooks H, while the hook.H protrudes into the corresponding recess 14. Due to the inclined bottom face 21 and the bent snapping lug 15 the snapping connection between the connecting element and the front cover is secured and functioned such as a barbed hook. Due to the springy connection between the first and the second part of the connecting element C, each snapping portion 13 applies pressure onto the hooks H vertical to the screen area. As a result, the rear cover 1 and the front cover 2 have contact with each other without gap. As a result, in the assembled position, each snapping portion 13 is admitted by a springy force.

Each connecting element C is generated as a springy connected strips, in particular as a fixing strip, i.e. the first part, with portions 5, 6 and sections 7, 8, 9, which passes into two snapping strips 13 by the support portion 12 of the second part. As mentioned above, the springy connection between the parts and also between the strips is generated by sections 7, 8, 9 of the first part.

The connecting elements C are generated as metal brackets and manufactured by punching tools and/or bending tools, namely with tools used by metal part manufacturing.

The thickness of the material of the connecting elements C, i.e. of the strips as which the first part and the second are generated, ranges from 0,5 to 1,5 mm. In one preferred embodiment of the invention, the thickness of the material is 0,8 mm.

The distance, the rear cover 1 is moved, ranges between 1 and 4 mm, preferably between 1,5 and 3 mm. The distance is determinable by a length of the second screw 24 with respect to a gap between the first rear section 7 and the second rear section 9. This is seen in figure 6.

The rear cover 1 and the front cover 2 are generated by a Polystyrene High Impact.

The screen size of this embodiment ranges e.g. from 11" to 26" or less. In an embodiment with a very small screen size only two connecting elements C are arranged at opposite sides of the flat screen panel P. In an embodiment, a flat screen assembly with a flat screen panel P with a screen size of e.g. 17" to 32" is used. The assembly is provided with twelve connecting elements C, three on each side. As an alternative, an assembly with a large screen is provided with four, five or more connecting elements C on each side, e.g. four connecting elements C for an assembly with a screen size of more than 32" and five connecting elements C for an assembly with a screen size of 50".

As an alternative, the flat screen assembly has a flat screen panel corresponding to the plasma technology.

## Claims

1. A flat screen assembly comprising a flat screen panel (P), a housing with at least a rear cover (1), a front cover (2) and a connection means, the connection means comprises at least one connecting element (C) which, in an assembled position, is fixed to the flat screen panel (P) and to the rear cover (1), where the connecting element (C) comprises at least one springy snapping portion (13) which, in the assembled position, engages a corresponding snapping means of the front cover (2).

2. A flat screen assembly according to claim 1, **characterized in that** the connecting element (C) comprises a first part and a second part, where the first part passes into the second part generating a springy connection, where the first part is fixed to the flat screen panel (P) and to the rear cover (1), and where the second part comprises one or more snapping portions (13).

3. A flat screen assembly according to claim 1 or 2, **characterized in that** each snapping portion (13) is generated as a strip and comprises a recess (14) where, in the assembled position, the snapping portion (13) extends parallel to a side of the flat screen panel (P).

4. A flat screen assembly according to one of the claims 1 to 3, **characterized in that** the snapping portion (13), in the assembled position, applies pressure to the snapping means of the front cover (2) in a direction vertical to a screen area.

5. A flat screen assembly according to claim 3 or 4, **characterized in that** the recess (14) is delimitated by a snapping lug (15).

6. A flat screen assembly according to one of the claims 3 to 5, **characterized in that** the snapping means comprises at least one hook (H) for each recess (14) which, in the assembled position, protrudes into the recess (14).

7. A flat screen assembly according to claims 2 to 6, **characterized in that** the first part is generated as a fixing strip and comprises a side portion (6) which extends parallel to a side of the flat screen panel (P) and at which, in the assembled position, the first part is fixed to the side.

8. A flat screen assembly according to claim 7, **characterized in that** the side portion (6) of the first part passes into a rear portion, which extends over a rear of the flat screen panel (P) and which generates the springy connection, where the rear portion comprises several strip sections (7, 8, 9), which are bent toward each other, and where at an end strip section (9), in the assembled position, the first part is fixed to the rear cover (1).

9. A flat screen assembly according to claim 7 or 8, **characterized in that** the second part comprises two snapping portions (13), which are arranged beside the side portion (6) of the first part.

10. A flat screen assembly according to one of the claims 1 to 9, **characterized in that** the connection means comprises at least two connection elements (C) which are arranged at opposite sides of the flat screen panel (P).

11. A flat screen assembly according to one of the claims 1 to 10, **characterized in that** the connection elements (C) are generated by metal brackets.
